# EUROPÄISCHE PATENTSCHRIFT

(11) **EP 0 602 658 B1**
(45) Veröffentlichungstag und Bekanntmachung des Hinweises auf die Patenterteilung: **16.02.2000**
(21) Anmeldenummer: 93120349.1
(22) Anmeldetag: 16.12.1993
(51) Int. Cl.: C08J 11/06, B29B 17/02, C08L 23/00

(54) **Verfahren und Vorrichtung zur Reinigung von Polyolefin**
Process and apparatus for the purification of polyolefin
Procédé et appareil pour la purification de polyoléfine

(30) Priorität: 18.12.1992 DE 4242858
(43) Veröffentlichungstag der Anmeldung: 22.06.1994
(73) Patentinhaber: Nordenia Verpackungswerke GmbH, D-49439 Steinfeld (DE)
(72) Erfinder: Lorenz, Arnulf, Dipl.-Chem., D-01159 Drseden (DE)
(74) Vertreter: Jabbusch, Wolfgang, Dr.Jur. Jabbusch, Wehser & Lauerwald Patentanwälte

(56) Entgegenhaltungen:
- EP-A- 0 359 106
- EP-A- 0 521 418
- US-A- 4 746 422
- DATABASE WPI Derwent Publications Ltd., London, GB; AN 75-39965W[24] & JP-A-49 107 070 (MITSUBISHI HEAVY IND. KK.) 11. Oktober 1974

## Beschreibung

Die Erfindung betrifft ein Verfahren zur Entfernung von Resten organischer Lösungsmittel und Nitrocellulose-Resten aus nach einer Lösungsmittel-Extraktion vorgereinigtem Polyolefin, insbesondere aus vorgereinigten Polyethylen-Recyclatschnitzeln sowie eine Vorrichtung zur Durchführung des Verfahrens.

Polyethylen ist ein Polyolefin, das in großen Mengen zur Herstellung von Folien für Verpackungszwecke verarbeitet wird. Aus den Folien werden z. B. Schrumpfhauben, Säcke und dergleichen hergestellt.

Polyethylen, als ein thermoplastischer Kunststoff, ist aufgrund seines strukturellen Molekülaufbaus wiederholt aufschmelzbar und verformbar. Es ist für eine mehrmalige Wiederverwendung grundsätzlich geeignet. Bereits in Verwendung gewesenes Polyolefin, z. B. Gebrauchsgegenstände wie Verpackungen, müssen jedoch vor einer Wiederverwendung zunächst einmal vorbehandelt werden, um Störstoffe, wie Klebeetiketten, Schmutz und sonstige Beimengungen, wie z. B. Flaschenkapseln oder dergleichen Metallteile, abzulösen und zu entfernen. Dazu sind Waschvorgänge mit Lösungsmitteln geeignet.

In der EP-A- 359 106 ist ein Waschvorgang mit Lösungsmitteln beschrieben, der außerdem der Aussortierung weiterer Störstoffe durch eine Art Schwimmsichtung dienen kann. Nachdem die durch das Waschen von Störstoffen befreiten Kunststoffe vom Lösungsmittel mechanisch getrennt sind, schließt sich dem bekannten Waschvorgang mit Lösungsmitteln eine Trocknung der Kunststoffteile an, indem Reste des Lösungsmittels mit Hilfe eines heißen Trägergases abgedampft werden.

Nach der US-A-4 746 422 ist eine Schwimmsichtung mittels eines Zweiphasengemisches aus Wasser und Lösungsmittel bekannt, um Störstoffe von einer Wiederverarbeitung zuzuführenden Kunststoffen zu trennen.

Einer Wiederverarbeitung zu hochwertigen Recyclingprodukten, vorzugsweise Polyethylenfolien mit definierten Eigenschaften, steht jedoch bei derart lediglich gewaschenen bzw. von Störstoffen befreiten gebrauchten Gegenständen aus Polyolefin entgegen, daß die gebrauchten Gegenstände insbesondere Folien bei ihrer Herstellung anwendungsorientiert mit Zuschlagsstoffen, wie Antistatika, Gleitmittel, Thermo- oder UV-Stabilisatoren ausgerüstet werden, die dann im daraus hergestellten Recyclingprodukt in unbekannten Mengen und Kombinationen vorliegen. Eine Sortierung der gebrauchten Gegenstände nach Inhaltsstoffen ist technisch und wirtschaftlich kaum möglich.

Recyclingprodukte, insbesondere Folien, die mit diesen Inhaltsstoffen belastet sind, führen bei ihrer Weiterverarbeitung zu Problemen, beispielsweise beim Kleben, Schweißen oder Bedrucken. Vielfach lösen sich Verbindungsnähte nach anfänglich guten Eigenschaften erst beim Anwender auf. Darüber hinaus enthalten die gebrauchten Folien Abbaustoffe des Polyethylens, wie Polyethylenwachse sowie Abbauprodukte der Zuschlagsstoffe. Diese entstehen während der Lebensdauer im Zuge von Verarbeitungsprozessen sowie durch Wärme-, Licht- und Wettereinwirkung. Diese bewirken zum Teil eine erhebliche Minderung der Gebrauchseigenschaften des Recyclingprodukts.

Letztlich sind die gebrauchten Folien, besonders Verpackungsfolien, mehr oder minder stark bedruckt. Diese Druckfarben führen bei der Extrusion von aufbereiteten Materialien zu Polyethylenfolien mit einer starken undefinierten Verfärbung, so daß daraus nur dunkel überfärbte Müllsäcke hergestellt werden können. Bei sehr hohen Druckflächenanteilen im Verhältnis zur Polymermenge können sogar unbrauchbare, von Zersetzungsgasen geschäumte Regranulate entstehen.

Zur Entfernung der Folienzuschlagsstoffe, der unpolaren Polyethylenwachse sowie der anhaftenden Druckfarben aus den gebrauchten Folien wird in der DE-OS 4 122 277, ein Verfahren beschrieben, bei dem die gebrauchten Folien zerschnitzelt und unter intensiver Bewegung in einem ein organisches Lösungsmittel enthaltenden Lösungsmittelbad einer Extraktion unterzogen werden.

Die mit einem organischen Lösungsmittel in der Wärme behandelten Schnitzel enthalten nach der mechanischen Abrennung des Lösungsmittels, z. B. im Fall von Ethylacetat noch ca. 50 bis 60 Gew.% Lösungsmittel. Dieses findet sich sowohl an den Oberflächen der Schnitzel als auch eindiffundiert im Schnitzelinneren. Ferner enthalten die Schnitzel noch oberflächlich Reste an Nitrocellulose, dem bevorzugten Bindemittel bei Flexodruckfarben. Diese Restmengen an Nitrocellulose, auch wenn sie gering sind, führen bei der Regranulierung zur Verkohlung und damit zu schwarzen Stippen in der Recyclatfolie.

Der Erfindung liegt die Aufgabe zugrunde, Verfahren bereitzustellen, mit denen man Polyolefin, vorzugsweise in Form von Polyethylenschnitzeln, reinigen kann.

Diese Aufgabe wird erfindungsgemäß dadurch gelöst, daß das vorgereinigte Polyolefin mit Wasser versetzt wird, und die zu entfernenden Lösungsmittel-Reste durch Erwärmen des Wassers auf eine über der Siedetemperatur des Lösungsmittels liegende Temperatur ausgetrieben werden und daß gleichzeitig die Reste an Nitrocellulose von der Oberfläche der Recyclatschnitzel abgewaschen werden.

Bei dem erfindungsgemäßen Verfahren kann die Austreibung und/oder die Extraktion kontinuierlich oder diskontinuierlich erfolgen.

In einer besonderen Ausführungsform wird als Lösungsmittel Ethylacetat verwendet.

Bei der diskontinuierlichen Fahrweise, z. B. im Rührreaktor, wird das Lösungsmittel, vorzugsweise Ethylacetat, unter Rühren bei einer Temperatur, die über der Siedetemperatur des Lösungsmittels liegt, ausgetrieben bzw. von der Oberfläche des Polyolefins verdampft. Im Falle des Ethylacetats genügt ein 30-minütiges Rühren bei einer Temperatur von 85 - 90°C. Ein Gewichtsverhältnis von Polyolefinschnitzel zu Waschwasser von 1 : 8 bis 1 : 10 hat sich als vorteilhaft erwiesen.

Bei der kontinuierlichen Fahrweise erfolgt die Befreiung der Polyolefinschnitzel vom Lösungsmittel mittels Wasser mit einer Temperatur von 70-75°C. Als hierfür geeignet hat sich ein Mehrkammerextrakteur erwiesen. Das Wasser durchströmt dabei die Schnitzelschüttung in den einzelnen Kammern mit einem konkret einstellbaren kontinuierlichen Volumenstrom über eine bestimmte Zeit. Das Wasser wird im Gegenstrom zu den Polyolefinschnitzeln geführt.

Nach diesem Wasch- und Extraktionsprozeß werden die Polyolefinschnitzel nochmals 5-10 Minuten mit Wasser hoher Turbulenz durchspült. Dieses Spülwasser kann im Kreislauf gefahren werden mit einem integrierten Filter zur Reinigung des Wassers. Mit diesem Spülvorgang werden noch Reste an Nitrocellulose von den Oberflächen der Polyolefinschnitzel sowie bis dahin durchgeschleuste feinste mineralische Verunreinigungen abgetrennt.

In einer speziellen Ausführungsform der Erfindung wird das mit Druckfarbenpigmenten und -bindemitteln, Folieninhaltsstoffen, wie Gleitmittel und Antistatika, sowie mit Polyethylenwachsen beladene Lösungsmittel, das vor der Behandlung mit Wasser von den Polyolefinschnitzeln mechanisch abgetrennt wurde, in einen nachgeschalteten Fällungsbehälter überführt.

Die Fällung zur quantitativen Abtrennung des Flexodruckfarbenbindemittels Nitrocellulose aus dem Lösungsmittel kann mit dem Waschwasser erfolgen. Die Fällung erfolgt vorteilhafterweise unter Rühren bei einer Temperatur von 30-70°C und einer Fällungsdauer von 10 Minuten. Bevorzugt ist hierbei eine Temperatur von 30-40°C und ein Gewichtsverhältnis von Lösungsmittel/Wasser von 1 : 1.

Bei diesem Fällungsprozeß werden neben der Nitrocellulose gleichzeitig die wasserunlöslichen Druckfarbenpigmente vollständig mit ausgefällt.

Die Lösungsmittelbrüden, die beim Waschvorgang entstehen, werden kondensiert, gesammelt und einem Lösungsmitteltank zugeführt. Dieser Tank dient als Vorratstank für das Lösungsmittel. Von dort kann das Lösungsmittel dann erneut dem Reinigungs- und Extraktionsreaktor als Kreislauflösungsmittel zugeführt werden.

Die Trennung des sich bei der Fällung bildenden Dreiphasengemisches, Lösungsmittel/Feststoffniederschlag/Wasser, kann in einer Phasentrennflasche erfolgen.

Der Feststoffniederschlag aus dem Dreiphasengemisch kann durch Filtration abgetrennt werden und das Wasser gegebenenfalls als Kreislaufwaschwasser eingesetzt werden, wobei das Wasser vorher gegebenenfalls über eine Säule mit Aktivkohle entfärbt werden kann.

Der Hauptanteil des Lösungsmittels im Feststoffniederschlag wird in einem nachgeschalteten Behälter mit heißem Wasser von ca. 90°C über eine bestimmte Zeit gerührt. Dabei wird das Lösungsmittel ausgetrieben. Zur vollständigen Beseitigung des Lösungsmittels aus dem Feststoffniederschlag kann desweiteren mit Dampf lösungsmittelfrei gestrippt werden und das Lösungsmittel nach Kondensation wieder verwendet werden. Der Niederschlag agglomeriert und kann problemlos mechanisch abgetrennt werden. Das Lösungsmittel wird kondensiert und kann als Kreislauflösungsmittel wieder verwendet werden. Auf diese Weise erfolgt der Austrag des Feststoffniederschlags wasserfeucht und lösungsmittelfrei und erfüllt somit die Sicherheitsvorschriften für den Transport und die Entsorgung in bezug auf Nitrocellulose.

Das Lösungsmittel angereicherte Wasser aus der Phasentrennung kann erneut vollständig zur Fällung der Nitrocellulose eingesetzt werden.

Das Lösungsmittel aus der Phasentrennung ist bereits soweit gereinigt, daß eine Teilmenge als Kreislauflösungsmittel im Verfahrensschritt Reinigung, das heißt zum Beispiel für die Druckfarbenablösung, erneut eingesetzt werden kann. Über eine entsprechende Meßanalyse des Lösungsmittels nach der Phasentrennung ist dieser Teilstrom regulierbar. Für die Meßanalyse eignet sich z. B. die Messung des Brechungsindex oder der Farbtiefe.

Der andere Teil des Lösungsmittels wird zur Aufarbeitung einer Verdampferanlage zugeführt und/oder er wird über eine Adsorbersäule gereinigt. Auf diese Weise kann dieser Teil des Lösungsmittels vollständig als Kreislaufprodukt über den Lösungsmittelvorratstank im Verfahrensschritt Extraktion wieder verwendet werden.

Diese Verfahrensweise ermöglicht die Reduzierung des erforderlichen Lösungsmittelbedarfs pro Mengeneinheit Polyolefinschnitzel auf eine technisch notwendige Mindestmenge, wobei die volle Wirksamkeit des Reinigungs- und Extraktionsprozesses gesichert ist. Gleichzeitig wird die erforderliche Verdampferleistung pro Mengeneinheit Polyolefinschnitzel, das heißt die Energiekosten für die Verdampfung, auf ein Minimum reduziert.

Bei der Verdampfung fällt ein Rückstand an, mit den Hauptbestandteilen Polyethylenwachse und geringen Anteilen an höheren Fettsäuren, Fettsäurederivaten, Fettalkohole, Phthalate und verlackten Druckfarbenpigmenten. Diese Prozeßrückstände sind als Wertstoffe für ausgewählte Anwendungen verwertbar, z. B. zur Herstellung bestimmter Foliensortimente, wie beispielsweise eingefärbte Müllsäcke. Bei einer zweiten Verfahrensvariante erfolgt die vollständige Reinigung des Lösungsmittelteilstroms aus der Phasentrennung durch Sorption. Die noch nach der Fällung mit Wasser im Lösungsmittel verbliebenen Begleitstoffe, wie Phthalate, Polyethylenwachse und geringere Anteile an Druckfarbenpigmenten, werden abgetrennt. Für ein solches Verfahren eignen sich sogenannte Adsorber-Erden, wie beispielsweise Magnesium-Aluminium-Hydrosilikate. Auch spezielle Aktivkohlen sind hierfür geeignet, sowie die Kombination beider Adsorbenzien. Bei dieser Verfahrensvariante ist der völlige Verzicht auf eine Verdampferanlage vorteilhaft, nachteilig sind jedoch die erhöhten Kosten für die Entsorgung sowohl der beladenen Adsorbersubstanz als auch der Lösungsmittelbegleitstoffe.

Die beiden Teilströme können gemeinsam dem Lösungsmitteltank zugeführt werden und somit vollständig für einen neuen Reinigungs- und Extraktionsprozeß verwendet werden.

Eine weitere Variante sieht die Reinigung des gesamten beladenen Lösungsmittels nach der Reinigung und Extraktion ohne Wasserfällung durch Hochleistungsfiltration vor, die in Kombination mit Sorption bzw. Verdampfung vorgenommen werden kann.

Zur Reinigung von Polyolefin, insbesondere von Polyethylen-Altfolienschnitzeln, ist es auch möglich, daß die Polyolefinschnitzel über eine mechanisch trockene Reinigung von losen Verunreinigungen befreit werden, im Verfahrensschritt der Reinigung mit einem Gemisch aus Lösungsmittel/Wasser versetzt werden, wodurch das Dreiphasengemisch bereits im Reaktor gebildet wird, das anschließend direkt in die Phasentrennflasche überführt werden kann.

Die Polyolefinschnitzel werden mit dem fest anhaftenden Restschmutzanteil hierbei ohne vorherige Wasserwäsche der Reinigung und Extraktion mit dem Lösungsmittel unterzogen. Diese in den Prozeß mit eingebrachten Schmutzteilchen erweisen sich als vorteilhaft bei der Ausfällung der Nitrocellulose mit Wasser, da sie die Bildung von Kondensationskeimen fördern. Damit wird die Filtrierbarkeit des Feststoffniederschlags wesentlich verbessert.

Feinste Teilchen an Schmutz, die durch die Verfahrensschritte der Reinigung und Extraktion mit durchgeschleust werden, werden nach der Restlösungsmittelentfernung der Schnitzel in einem Spülprozeß mit sauberem Wasser behandelt.

In den Spülwasserkreislauf ist ein Filter zur Abscheidung der Feststoffteilchen eingebaut. Über eine Meßeinrichtung, die beispielsweise den Trübungsgrad mißt, ist die Dauer des Spülvorgangs steuerbar. Bei dieser Variante des Verfahrens ist es besonders vorteilhaft, daß die Polyolefinschnitzel nicht mehr über eine aufwendige Wäsche mit Wasser von Schmutz gereinigt werden und daher eine Verringerung der Betriebskosten erreicht werden kann.

In einer weiteren Verfahrensvariante zur Reinigung von Polyolefin, insbesondere von Polyethylen-Altfolienschnitzeln, wird das Polyolefin nach einer mechanisch trockenen Reinigung mit einem Gemisch aus Lösungsmittel/Wasser einem ersten kurzen Reinigungsschritt mit hoher Friktionsbewegung unterzogen.

Das Verhältnis Lösungsmittel/Wasser ist vorzugsweise 1:1 bis 1:3, die Reaktionszeit beträgt maximal 5 Minuten bei einer Temperatur von 50-60°C. Das sich bereits bei diesem Verfahrensschritt bildende Dreiphasengemisch kann unmittelbar in die Phasentrennflasche abgeführt werden. Diese Ausführungsform hat den Vorteil, daß die Reinigung der Polyolefinschnitzel über eine Wasserwäsche entfällt. Ferner wird der an den Schnitzeln fest anhaftende Restschmutz nach der mechanischen trockenen Reinigung bereits im Verfahrensschritt der Reinigung vollständig abgetrennt.

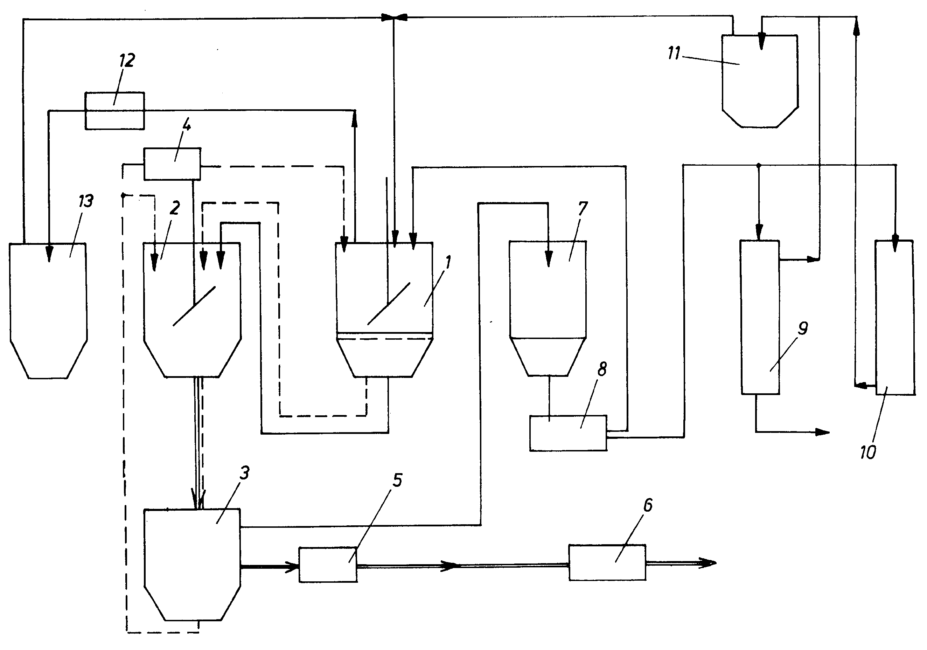

Ein Ausführungsbeispiel ist in der Zeichnung schematisch dargestellt.

Die Zeichnung zeigt ein Fließdiagramm zur Verdeutlichung des Ablaufs des Verfahrens.

In der Zeichnung beschreiben die gestrichelten Linien den Fluß des Wassers, die dünnen durchgehenden Linien den Fluß des Lösungsmittels und die Doppellinien den Fluß von Feststoffen.

In einem Reinigungs- und Extraktionsreaktor 1, der auch die Funktion eines Lösungsmittelsmittelbades haben kann, werden gebrauchte Polyolefinschnitzel in Ethylacetat als Lösungsmittel eingerührt.

Sobald die Reinigung und Extraktion beendet ist, wird Ethylacetat, das mit Folieninhaltsstoffen, mit Druckfarbenpigmenten und -bindemitteln sowie Polyethylenwachsen beladen ist, mechanisch von den Polyolefinschnitzeln getrennt und einem nachgeschalteten Fällungsbehällter 2, der ebenfalls mit einem Rührwerk ausgestattet ist, zugeführt.

Die derart vorgereinigten Schnitzel werden mit Wasser von 85-90°C suspendiert und unter starker Bewegung gewaschen. Dabei ist es wesentlich, daß die Temperatur des Wassers über dem Siedepunkt des Ethylacetats liegt, damit dessen Verdampfung erfolgt.

Die freigesetzten Lösungsmitteldämpfe können über eine nachgeschaltete Kondensationsstrecke einem Lösungsmitteltank zugeführt werden.

Danach werden die lösungsmittelfreien Schnitzel mechanisch vom Waschwasser abgetrennt.

Das mit Resten an Nitrocellulose und Ethylacetat befrachtete Waschwasser kann ebenfalls dem Fällungsbehälter 2 zur Ausfällung der Nitrocellulose zugeführt werden. Die Ausfällung wird bei einer Temperatur von 30-40°C, einer Fällungsdauer von 10 Minuten und einem Verhältnis Ethylacetat/Wasser von 1:1 durchgeführt. Aus dem Fällungbehälter 2 wird das Gemisch aus Ethylacetat/Feststoffniederschlag/Wasser einer Phasentrennflasche 3 zugeführt, in der die Trennung in einzelne Phasen erfolgt.

Der Feststoff wird aus dem Gemisch durch eine Filtriervorrichtung 5 abgetrennt und anschließend mit Dampf lösungsmittelfrei gestrippt. Über eine nachgeschaltete Teilentwässerungsvorrichtung 6, die mechanisch oder thermisch arbeitet, kann der Feststoffniederschlag auf die Restfeuchte eingestellt werden, die aus Sicherheitsgründen bezüglich der Nitrocellulose erforderlich ist.

Ein Teil des Wassers wird als Kreislaufwasser dem Fällungsbehälter zugeführt. Der andere Teil kann über eine Säule mit Aktivkohle 4, falls erforderlich, entfärbt werden. Das so gereinigte Wasser wird nunmehr als Kreislaufwaschwasser wieder der Reinigungs- und Extraktionsanlage zugeführt, um die Polyolefinschnitzel vom Restlösungsmittel und Resten an Nitrocellulose zu befreien.

Das Lösungsmittel aus der Phasentrennung wird einem Pufferbehälter 7 zugeführt und anschließend in einer Analysevorrichtung 8 analysiert. Ein Teilstrom kann direkt als Kreislauflösungsmittel für die Verfahrensstufe Reinigung wiederverwendet werden. Der andere Teil des Lösungsmittels wird einer Verdampferanlage 9 oder einem Adsorber 10 zugeführt und dort vollständig gereinigt. Das gereinigte Lösungsmittel wird anschließend in einem Vorratstank 11 gesammelt und als Kreislauflösungsmittel in der Verfahrensstufe Extraktion eingesetzt.

Die aus dem Reaktor 1 austretenden Lösungsmittelbrüden werden durch den Kondensator 12 kondensiert und das Lösungsmittel einem Vorratstank 13 zugeführt. Von dort kann das Lösungsmittel als Kreislauflösungsmittel erneut zur Reinigung im Reaktor 1 eingesetzt werden.

## Patentansprüche

1. Verfahren zur Entfernung von Resten organischer Lösungsmittel und Nitrocellulose-Resten aus nach einer Lösungsmittel-Extraktion vorgereinigtem Polyolefin, insbesondere aus vorgereinigten Polyethylen-Recyclatschnitzeln,
**dadurch gekennzeichnet**,
daß das vorgereinigte Polyolefin mit Wasser versetzt wird, und die zu entfernenden Lösungsmittel-Reste durch Erwärmen des Wassers auf eine über der Siedetemperatur des Lösungsmittels liegende Temperatur ausgetrieben werden und daß gleichzeitig die Reste an Nitrocellulose von der Oberfläche der Recyclatschnitzel abgewaschen werden.

2. Verfahren nach Anspruch 1, dadurch gekennzeichnet, daß die Austreibung und/oder die vorreinigende Extraktion kontinuierlich oder diskontinuierlich erfolgt.

3. Verfahren nach Anspruch 1 oder 2, dadurch gekennzeichnet, daß als Lösungsmittel für die vorreinigende Extraktion Ethylacetat verwendet wird.

4. Verfahren nach Anspruch 3, dadurch gekennzeichnet, daß das Wasser unter Rühren auf eine Temperatur von 85 bis 90°C erwärmt wird.

5. Verfahren nach einem der vorhergehenden Ansprüche, dadurch gekennzeichnet, daß das Gewichtsverhältnis bei diskontinuierlicher Fahrweise Polyolefin zu Waschwasser 1 : 8 bis 1 : 10 die Kontaktzeit 30 Minuten beträgt.

6. Verfahren nach einem der Ansprüche 1 bis 3, dadurch gekennzeichnet, daß die Befreiung der vorgereinigten Polyolefinschnitzel vom Lösungsmittel kontinuierlich mit Wasser erfolgt, das Wasser auf 70 bis 75°C erwärmt wird und daß die Polyolefinschnitzelschüttung mit einem definierten Volumenstrom des erwärmten Wassers durchströmt wird.

7. Verfahren nach einem der Ansprüche 5 oder 6, dadurch gekennzeichnet, daß das Wasser zur Extraktion im Kreislauf mit einem bestimmten Volumenstrom über eine definierte Zeit gefahren wird.

8. Verfahren nach einem der vorhergehenden Ansprüche, dadurch gekennzeichnet, daß das Waschwasser zur Ausfällung der Nitrocellulose aus dem Lösungsmittel im Fällungsbehälter (2) verwendet wird.

9. Verfahren nach einem der vorhergehenden Ansprüche, dadurch gekennzeichnet, daß die Fällungsdauer 10 Minuten, die Temperatur 30 bis 70°C beträgt.

10. Verfahren nach Anspruch 8, dadurch gekennzeichnet, daß die Temperatur 30 bis 40°C und das Gewichtsverhältnis Lösungsmittel zu Wasser 1 : 1 beträgt.

11. Verfahren nach einem der vorhergehenden Ansprüche, dadurch gekennzeichnet, daß Lösungsmittelbrüden beim Waschen gesammelt und einem Lösungsmitteltank (13) zugeführt werden und gegebenenfalls als Kreislauflösungsmittel eingesetzt werden.

12. Verfahren nach einem der Ansprüche 7 bis 10, dadurch gekennzeichnet, daß das Gemisch aus Lösungsmittel/Wasser/Feststoffniederschlag mittels einer Phasentrennflasche (3) in Lösungsmittel, Wasser und Feststoffniederschlag getrennt wird.

13. Verfahren nach Anspruch 11, dadurch gekennzeichnet, daß der Feststoffniederschlag aus dem Dreiphasengemisch durch Filtration abgetrennt wird und das Wasser gegebenenfalls als Kreislaufwaschwasser eingesetzt wird, wobei das Wasser vorher gegebenenfalls über eine Säule mit Aktivkohle (4) entfärbt wird.

14. Verfahren nach Anspruch 12, dadurch gekennzeichnet, daß der Feststoffniederschlag mit Dampf lösungsmittelfrei gestrippt wird und das Lösungsmittel nach Kondensation wiederverwendet wird.

15. Verfahren nach einem der Ansprüche 7 bis 11, dadurch gekennzeichnet, daß das Lösungsmittel durch die Fällung mit Wasser so weit gereinigt wird, daß es nach der Phasentrennung in einem ersten Teilstrom direkt als Kreislauflösungsmittel im Verfahrensschritt Reinigung (vorreinigende Extraction) eingesetzt werden kann.

16. Verfahren nach Anspruch 14, dadurch gekennzeichnet, daß das Lösungsmittel in einem zweiten Teilstrom über eine Verdampferanlage (9) und/oder über eine Adsorbersäule (10) gereinigt wird.

17. Vorrichtung zur Durchführung des Verfahrens nach einem der Ansprüche 1 bis 16, gekennzeichnet durch einen Reinigungs- und Extraktionsreaktor (1), einen nachgeschalteten Fällungsbehälter (2), jeweils mit integriertem Rührwerk, eine nachfolgende Phasentrennflasche (3), gegebenenfalls eine Säule mit Aktivkohle (4) zur Entfärbung des Wassers, eine Verdampferanlage (9) und/oder eine Adsorbersäule (10) zur Läsungsmittelreinigung sowie einen Lösungsmitteltank (11).

## Claims

1. A process for the removal of residues of organic solvents and nitrocellulose residues from polyolefin prepurified by solvent extraction, in particular from prepurified recycled polyethylene shreds, characterised in that the prepurified polyolefin is mixed with water, and the solvent residues to be removed are expelled by heating the water to a temperature above the boiling temperature of the solvent, and in that the residues of nitrocellulose are simultaneously washed off the surface of the recycled shreds.

2. A process according to claim 1, characterised in that expulsion and/or prepurifying extraction are carried out continuously or discontinuously.

3. A process according to claim 1 or 2, characterised in that ethyl acetate is used as a solvent for prepurifying extraction.

4. A process according to claim 3, characterised in that the water is heated to a temperature of 85°C to 90°C while being stirred.

5. A process according to any one of the preceding claims, characterised in that, during discontinuous operation, the weight ratio of polyolefin to washing water is 1 : 8 to 1 : 10 and the contact time is 30 minutes.

6. A process according to any one of claims 1 to 3, characterised in that the liberation of the prepurified polyolefin shreds from the solvent is carried out continuously with water, the water is heated to 70°C to 75°C, and a defined volumetric flow of the heated water flows through the shredded polyolefin material.

7. A process according to either one of claims 5 and 6, characterised in that the extraction water is circulated with a specified volumetric flow over a defined time.

8. A process according to any one of the preceding claims, characterised in that the washing water is used for precipitation of the nitrocellulose from the solvent in the precipitation container (2).

9. A process according to any one of the preceding claims, characterised in that the precipitation time is 10 minutes and the temperature is 30°C to 70°C.

10. A process according to claim 8, characterised in that the temperature is 30°C to 40°C and the weight ratio of solvent to water is 1 : 1.

11. A process according to any one of the preceding claims, characterised in that solvent vapours are collected during washing and fed to a solvent tank (13) and are optionally used as recirculation solvent.

12. A process according to any one of claims 7 to 10, characterised in that the mixture of solvent/water/solid precipitate is separated by means of a phase-separation flask (3) into solvent, water and solid precipitate.

13. A process according to claim 11, characterised in that the solid precipitate is separated from the tree-phase mixture by filtration and the water is optionally used as recirculation washing water, the water optionally having been previously decolorised via an activated-carbon column (4).

14. A process according to claim 12, characterised in that the solid precipitate is stripped free of solvent with vapour, and the solvent is reused after condensation.

15. A process according to any one of claims 7 to 11, characterised in that the solvent is purified by precipitation with water to such an extent that, after phase separation, it can be used directly as recirculation solvent in a first sub-flow in the process step of purification (prepurifying extraction).

16. A process according to claim 14, characterised in that the solvent is cleaned in a second sub-flow via an evaporation installation (9) and/or via an adsorption column (10).

17. Apparatus for carrying out the process according to any one of claims 1 to 16, characterised by a cleaning and extraction reactor (1), a precipitation container (2) connected downstream, each having an integral stirrer, a phase-separation flask (3) arranged downstream, optionally an activated-carbon column (4) for decolorising the water, an evaporation installation (9) and/or a adsorption column (10) for solvent purification arid a solvent tank (11).

## Revendications

1. Procédé pour éliminer des résidus de solvants organiques et des résidus de nitrocellulose à partir d'une polyoléfine purifiée au préalable par une extraction aux solvants, en particulier à partir de copeaux de recyclage de polyéthylène purifiés au préalable, caractérisé en ce que la polyoléfine purifiée au préalable est additionnée d'eau, et les résidus de solvants devant être éliminés sont expulsés par chauffage de l'eau à une température supérieure à la température d'ébullition du solvant, et en ce que simultanément les résidus de nitrocellulose sont éliminés par lavage de la surface des copeaux de recyclage.

2. Procédé selon la revendication 1, caractérisé en ce que l'expulsion et/ou l'extraction assurant une purification préalable sont effectuées en continu ou d'une manière discontinue.

3. Procédé selon la revendication 1 ou 2, caractérisé en ce qu'on utilise de l'acétate d'éthyle en tant que solvant pour l'extraction assurant une purification préalable.

4. Procédé selon la revendication 3, caractérisé en ce que l'eau est chauffée à une température de 85 à 90°C sous agitation.

5. Procédé selon l'une des revendications précédentes, caractérisé en ce que le rapport en poids de la polyoléfine à l'eau de lavage est de 1:8 à 1:10 en marche discontinue, le temps de contact étant de 30 minutes.

6. Procédé selon l'une des revendications 1 à 3, caractérisé en ce que la séparation, d'avec le solvant, des copeaux de polyoléfine purifiés au préalable, s'effectue en continu avec de l'eau, l'eau est chauffée à une température de 70 à 75°C, et en ce que les copeaux de polyoléfine en vrac sont traversés par un débit volumique parfaitement défini de l'eau chauffée.

7. Procédé selon l'une des revendications 5 ou 6, caractérisé en ce que l'eau destinée à l'extraction passe en circuit fermé, à un certain débit volumique, pendant un certain temps.

8. Procédé selon l'une des revendications précédentes, caractérisé en ce que l'eau de lavage est utilisée pour séparer la nitrocellulose du solvant par précipitation dans le récipient de précipitation (2).

9. Procédé selon l'une des revendications précédentes, caractérisé en ce que la durée de la précipitation est de 10 minutes, la température étant de 30 à 70°C.

10. Procédé selon la revendication 8, caractérisé en ce que la température est de 30 à 40°C, le rapport en poids du solvant à l'eau étant de 1:1.

11. Procédé selon l'une des revendications précédentes, caractérisé en ce les vapeurs de solvant sont recueillies lors du lavage et envoyées dans une cuve à solvant (13), et sont éventuellement utilisées en tant que solvant en circuit fermé.

12. Procédé selon l'une des revendications 7 à 10, caractérisé en ce que le mélange solvant/eau/précipité solide est séparé à l'aide d'une bouteille (3) de séparation des phases en le solvant, l'eau et le précipité solide.

13. Procédé selon la revendication 11, caractérisé en ce que le précipité solide est séparé du mélange triphasique par filtration, et l'eau est utilisée éventuellement en tant qu'eau de lavage en circuit fermé, l'eau ayant été au préalable éventuellement décolorée sur une colonne contenant du charbon actif (4).

14. Procédé selon la revendication 12, caractérisé en ce que le précipité solide est rectifié sans solvant à l'aide de vapeur, et le solvant est réutilisé après la condensation.

15. Procédé selon l'une des revendications 7 à 11, caractérisé en ce que le solvant est purifié, par précipitation avec de l'eau, au point qu'il peut, après séparation des phases, être utilisé directement dans un premier courant partiel en tant que solvant en circuit fermé dans l'étape de purification (extraction assurant une purification préalable).

16. Procédé selon la revendication 14, caractérisé en ce que le solvant est purifié, dans un deuxième courant partiel, par une installation d'évaporation (9) et/ou une colonne d'adsorption (10).

17. Equipement pour mettre en oeuvre le procédé selon l'une des revendications 1 à 16, caractérisé par un réacteur de purification et d'extraction (1), un récipient de précipitation (2) installé en aval, chacun comportant un agitateur intégré, une bouteille (3) de séparation des phases installée en aval, éventuellement une colonne garnie de charbon actif (4) pour décolorer l'eau, une installation d'évaporation (9) et/ou une colonne d'adsorption (10) pour purifier le solvant, ainsi qu'une cuve à solvant (11).
